# EUROPEAN PATENT APPLICATION

(11) **EP 1 359 457 A1**
(43) Date of publication of application: **05.11.2003**
(21) Application number: 03425253.6
(22) Date of filing: 23.04.2003
(51) Int. Cl.: G02C 1/06

(54) **Eyeglasses with replaceable lenses**

(30) Priority: 30.04.2002 IT FI20020047 U
(71) Applicant: Espressioni di Moda S.r.l., 59100 Prato (IT)
(72) Inventor: Cadamuro, Vania, 36061 Bassano del Grappa (Vicenza) (IT)
(74) Representative: Bardini, Marco Luigi

(57) **Abstract**

A pair of eyeglasses comprising a mounting (1) consisting of two side-pieces (2) hinged to a frontal frame (3) that defines a pair of seatings (4), a groove extending along the periphery of the seatings permitting the reversible insertion by means of snap fits of respective lenses (5). The groove is defined between a frontal lip (3a) and a posterior lip (3b) projecting from the edges of the seatings. The eyeglasses are characterized in that said posterior lip (3b) is of a greater height than the frontal lip (3a) over at least a part of said periphery and that in each seating the external side (4d) is ritempted by a window (7) formed in the frame (3) starting from the side (4d) and towards the adjacent side-piece (2). In this way the mounting is capable of accommodating in an interchangeable manner not only lenses of such shape as to engage with the groove (6) along its entire length, but also with lenses of different shape such as to engage only partially with the groove (6), where in this latter case the posterior lip (3b) cooperates with the lenses (5) in the obstruction of the seatings (4).

## Description

The present invention concerns the eyeglass field. More particularly, it sets out to provide a new model of glasses with replaceable lenses.

In the crowded field of the eyeglass industry, there is a strongly felt need for finding new solutions capable of offering the user ever greater possibilities of personalization. More generally, the proposal of an original solution may constitute an important commercial success for the producer who conceived it and, consequently, the acquisition of a significant market share. The search for such new solutions is therefore very active and aims at identifying articles that, on account of their aesthetic and functional characteristics, are capable of meeting the tastes of the public and thus bring into being a strong incentive to purchase.

Within the scope of this search there have been proposed in the past sunglasses in which the user, thanks to a snap-type fixing system, can very easily remove the lenses from their mounting and replace them with others, without seeking the assistance of a specialized technician at an optician's shop. This solution offers the possibility of providing the user with a kit consisting of a frame and two or more pairs of interchangeable lenses that have the same shape, but different colours and / or gradation of screening. The lenses can also be sold separately, so that the user, acquiring them, can renew a previously purchased pair of glasses in a very simple and economic manner.

On the other hand, the shape constraint imposed by the mounting greatly limits the possibility of modifying the aesthetics of the glasses. As previously mentioned, these modifications can in practice involve only the colour and / or the gradation of transparency of the lenses. For this reason the proposed solution has enjoyed little success.

According to the present invention there has now been surprisingly identified a new model of glasses that, thanks to a mounting of original configuration, has a greater renewal potential than the glasses of the known technique that have just been described and therefore offer the user entirely new possibilities of transforming and personalizing an already purchased article.

This result is attained by glasses in accordance with the present invention comprising a mounting with a frontal frame that defines a pair of seatings and two side-pieces hinged to the frame, where along the periphery of the seatings there runs a groove in which respective lenses can be engaged by means of a reversible snap fit, said groove being defined between a frontal lip and a posterior lip projecting from the edges of the seatings. The glasses are characterized in that the posterior lip, for at least a part of said periphery, is of a greater height than the frontal lip and by the fact that along the outer side of each seating there is formed a window that extends towards the adjacent side-piece. In this way the mounting can interchangeably accommodate not only lenses of a shape such as to engage with the groove along its entire length, but also lenses of different shape that will only partially engage with the groove, in which case the posterior lip will cooperate with the lenses in obstructing the seatings.

The characteristics and advantages of the eyeglasses with exchangeable lenses in accordance with the present invention will be brought out more clearly by the description about to be given of an embodiment thereof, said description, which is given by way of example and is not to be considered limitative in any way, making reference to the attached drawings, in which:
- figure 1 shows a perspective view of the glasses in accordance with the invention;
- figure 2 shows a front view of the glasses of figure 1;
- figure 3 shows a front view, similar to the one shown in figure 2, of the mounting of the glasses without lenses;
- figure 4 shows a simplified sectional view taken along lines IV - IV of figure 2; and
- figures 5a to 5g show a pair of glasses with respective examples of lenses of different shapes.

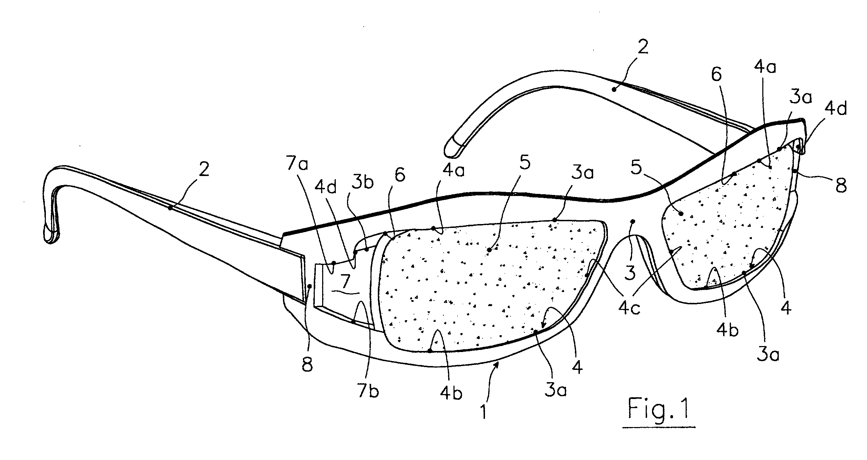

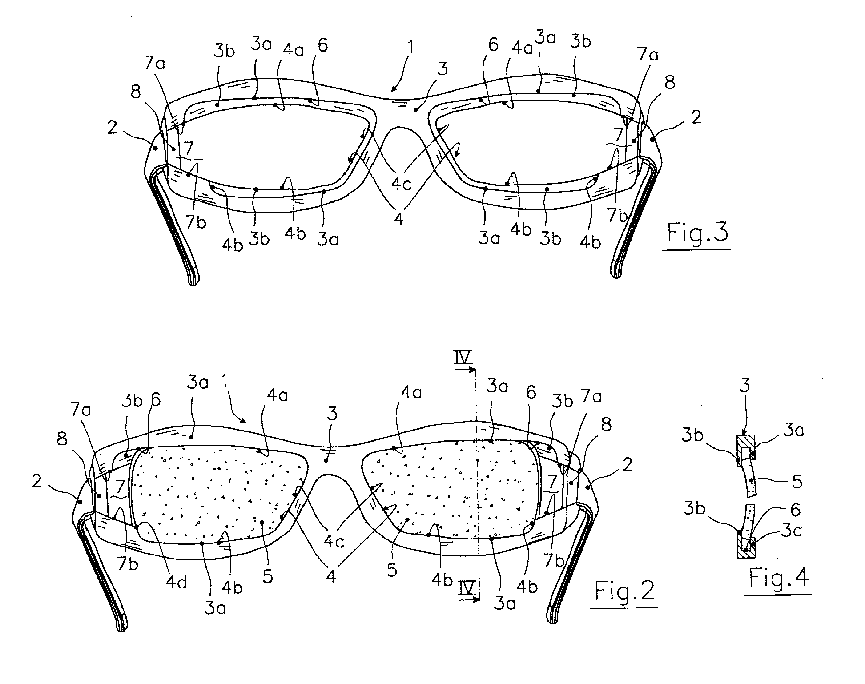

Referring to figures 1 to 4, a pair of glasses in accordance with the invention comprises a mounting 1 of a generally traditional structure, with two side-pieces 2 hinged on the two sides of a frontal frame 3. On the latter there is formed a pair of seatings 4 to accommodate respective lenses 5. In fact, the seatings 4 are provided with respective peripheral grooves 6, each of which - as can be seen particularly well in figure 4 - is defined between a frontal lip 3a and a posterior lip 3b projecting integrally from frame 3 in a plane substantially at right angles to the line of sight.

The edge of lenses 5 engages with grooves 6 by means of a snap fit, the engagement being assisted by the flexibility of the material of which mounting 1 is made. The insertion is effected from the front side of the frame, and to this end the height of the front lip 3a, measured radially with respect to the centre of the seating 4, is reduced. The height of the posterior lip, on the other hand, is substantially greater, this for reasons that will become clear further on.

In each of the seatings 4, groove 6 runs all the way along the upper edge 4a and the lower edge 4b, as also along the internal side 4c, i.e. the side that, when the glasses are worn, comes to be positioned on the user's nose. To the contrary, on the external side 4d, i.e. the side adjacent to the side-piece 2, groove 6 is interrupted due to the effect of a window 7 formed in frame 3 extending from said side towards the side-piece 2.

Window 7 preferably decreases in height - as shown in the illustrated example - between side 4d and a crosspiece 8 by means of which frame 3 is attached to side-piece 2. Even more preferably, and always in accordance with the illustrated embodiment, the upper edge 7a and the lower edge 7b of the window 7 coincide with the theoretical prolongation of the crest of the posterior lip 3a beyond the exterior side 4d. The posterior lip 3a is thus made even greater in height in the junction area between the exterior side 4d and, respectively, the upper edge 4a and the lower edge 4b of each seating 4.

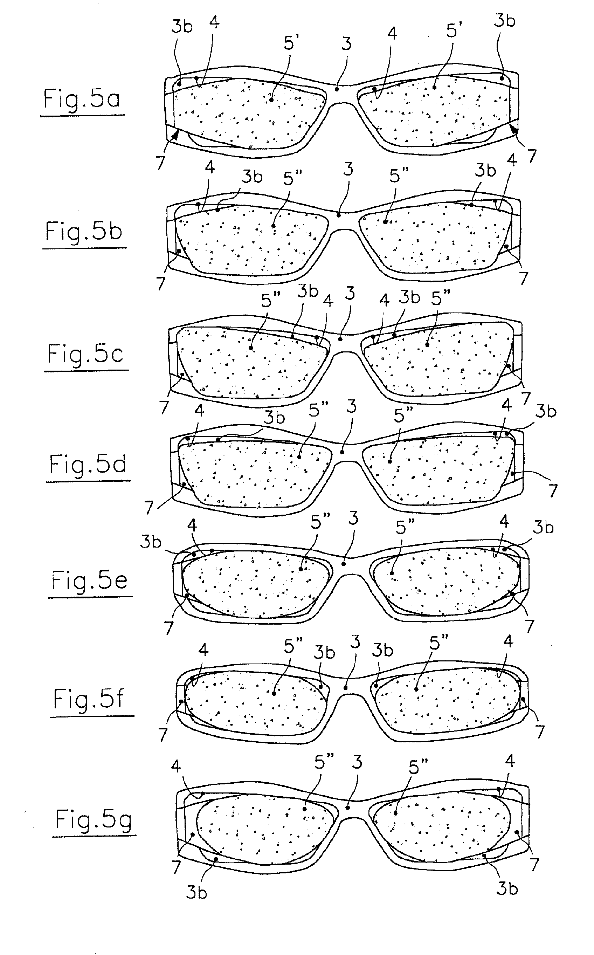

Referring now also to figures 5a to 5g, the particular shape of the mounting 1 of the glasses in accordance with the invention, permits to accommodate lenses of different outline in an interchangeable manner. Thanks to window 7, in fact, as also the particular size of the posterior lip 3b, it is possible for narrower and more elongated lenses 5', like those of figure 5a, to be inserted in window 7. In this case, the increased extension towards the outer side, is precisely accepted by window 7, while - notwithstanding the smaller height of lens 5' - seating 4 is obstructed in a complete manner thanks to the action of the posterior lip 3b. The latter remains in view from the outside, thus giving rise, above all, to a pleasing aesthetic effect.

A similar action is carried out by the posterior lip 3b also in the case of the solutions shown in figures 5b to 5g, where the lenses 5" have a shape such as not to completely obstruct seating 4 (as defined by the crest of the frontal lip 3a). The posterior lip 3b thus closes the seating only along the upper edge (figures 5b to 5d) or on both the upper and the lower edge (figures 5e to 5g). In particular, one should note from the example illustrated by figure 5g that it is possible to use even lenses of an oval profile, which clearly brings about a radical change of the overall aesthetics of the article. In all these cases window 7 remains open to a greater or lesser extent, though this does not involve any significant disadvantages in view of the fact that the window is situated in the margins of the visual field.

Quite apart from the important prerogatives of an aesthetic nature that have just been described, it should be noted that window 7 makes it possible for the operations of extracting the lenses 5 from the seatings 4 to be carried out more readily, since it makes it easier to get a grip on the outside edge of the lenses. The deformability of the frontal frame 3 is also appreciably increased and this - as is readily obvious - assists the operations of inserting the lenses 5 in the perimetral groove 6 and removing them therefrom.

Thanks to the glasses in accordance with the present invention it is therefore possible to offer the customer real and radical possibilities of transforming and / or personalizing the purchased article, possibilities that go well beyond the mere one of changing the colour of the lenses hitherto offered by the prior art. The glasses can be sold in kits together with a set of lenses of different shapes. These lenses can also be sold individually and therefore chosen and purchased also at some subsequent moment. The mounting, likewise, can be sold individually, so that it may take the place of a previously purchased mounting, while yet making it possible to continue using the lenses already possessed. Given their novel functional characteristics, the glasses in accordance with the invention therefore represent a solution capable of finding full favour with the public.

Apart from the shapes shown in the illustrated examples, the lenses can obviously also assume numerous other shapes that are capable of realizing the snap fit with the grooves 6 and obstructing the seatings 4 in an adequate manner. Possibly, in cases in which this obstruction might not fully satisfy the functional and /or aesthetic requirements, as in the case of the oval lenses of figure 5g, it is possible to use supplementary inserts, made - for example - of methacrylate and supplied with the lenses, to be fitted into the spaces that have remained free. As in the known technique, the lenses may also be of different colours and different screening capacities. Lastly, the mounting may be made not only of plastic material, but also any other material capable of assuring the deformability needed in order to permit the lenses being inserted by means of a snap fit.

The terms upper, lower, posterior and frontal used in the present description are referred, as seems in any case obvious, to the glasses as worn by a user in an erect position.

Variations and / or modifications can, of course, be introduced into the eyeglasses with exchangeable lenses in accordance with the present invention, without for that reason departing from the scope of the invention.

## Claims

1. A pair of eyeglasses comprising a mounting with a frontal frame that defines a pair of seatings and two side-pieces hinged to said frame, a groove being formed along the periphery of said seatings in order to permit the reversible insertion of respective lenses by means of snap fits, said groove being defined between a frontal lip and a posterior lip projecting from the edges of the seatings, said eyeglasses being **characterized in that** said posterior lip is of a greater height than said frontal lip over at least a part of said periphery, and by the fact that along the external side of each seating there is formed a window that extends towards the adjacent side-piece, so that said mounting is capable of accommodating in an interchangeable manner not only lenses of such shape as to engage with said groove along its entire length, but also lenses of different shape such as to engage only partially with the groove, where in this latter case the posterior lip cooperates with the lenses in the obstruction of the seatings.

2. Eyeglasses according to claim 1, wherein the height of said window decreases moving from said side to a cross-piece by means of which said frame is attached to said side-pieces.

3. Eyeglasses according to claim 2, wherein the lower edge and the upper edge of said window coincide with theoretical prolongation, as seen from the front, of the crest of said posterior lip beyond said external side of the respective seating.

4. Eyeglasses according to one of the previous claims, wherein said posterior lip is further increased in height in the junction zone between the external side of the seating and, respectively, the upper and the lower edge of the seating.

5. Eyeglasses according to one of the previous claims, comprising also supplementary interception means fit to be reversibly engaged in the spaces possibly not obstructed by said posterior lip and said lenses.

6. A kit comprising an eyeglass mounting according to any one of the previous claims and at least two pairs of interchangeable lenses of different shape.
